# FASCICULE DE BREVET EUROPEEN

(11) **EP 2 619 419 B1**
(45) Date de publication et mention de la délivrance du brevet: **05.11.2014**
(21) Numéro de dépôt: 11771263.8
(22) Date de dépôt: 22.09.2011
(51) Int. Cl.: F01D 11/04, F01D 25/12, F01D 25/18, F01D 25/22, F16N 7/38, F01D 25/16, F02C 7/18

(54) **SYSTEME DE PRESSURISATION DES ENCEINTES DE PALIERS DES TURBOMACHINES PAR DE L'AIR PRELEVE DANS LA MANCHE D'ENTREE**
SYSTEM ZUM UNTERDRUCKSETZEN DER LAGERKAMMERN VON TURBINENMOTORMASCHINEN MIT LUFT AUS DEM ANSAUGKANAL
SYSTEM FOR PRESSURISING THE BEARING CHAMBERS OF TURBINE ENGINES MACHINES USING AIR TAKEN FROM THE INTAKE DUCT

(30) Priorité: 23.09.2010 FR 1057642
(43) Date de publication de la demande: 31.07.2013
(73) Titulaire: Snecma, 75015 Paris (FR)
(72) Inventeur: DOS SANTOS, Nelson, F-94000 Créteil (FR); IGEL, Dominik, F-77370 Nangis (FR); MORREALE, Serge, René, F-77390 Guignes (FR)
(74) Mandataire: Gevers France
(86) Numéro de dépôt international: PCT/FR2011/052197
(87) Numéro de publication internationale: WO 2012/038667

(56) Documents cités:
- EP-A1- 1 933 077
- EP-A2- 1 905 962
- EP-A2- 2 050 932
- GB-A- 695 482
- US-A1- 2005 211 093

## Description

Le domaine de la présente invention est celui des turbomachines aéronautiques et, plus particulièrement celui de la pressurisation des enceintes internes à ces turbomachines.

Les turbomachines modernes sont classiquement réalisées sous la forme d'un assemblage de modules comportant soit des parties mobiles soit des parties fixes. Elles comprennent tout d'abord, en partant de l'amont, un ou plusieurs modules de compresseur disposés en série, qui compriment de l'air aspiré dans une entrée d'air. L'air est ensuite introduit dans une chambre de combustion où il est mélangé à un carburant et brûlé. Les gaz de combustion passent à travers un ou plusieurs modules de turbine qui entraînent le ou les compresseurs. Les gaz sont enfin éjectés soit dans une tuyère pour produire une force de propulsion soit sur une turbine libre pour produire de la puissance qui est récupérée sur un arbre de transmission.

Les pièces tournantes, telles que le ou les arbres de rotation, le ou les compresseurs et la ou les turbines, sont portées par des pièces structurales au moyen de paliers et de roulements qui sont enfermés dans des enceintes pour leur lubrification et leur refroidissement. Les turbomachines comprennent généralement deux enceintes de lubrification, une située à l'avant qui renferme les paliers positionnés du côté des compresseurs et une située à l'arrière qui renferme les paliers positionnés du côté des turbines. Ces enceintes sont constituées par un assemblage de parois mobiles et de parois fixes, entre lesquelles sont positionnés des dispositifs, du type labyrinthes, pour assurer la nécessaire étanchéité entre elles.

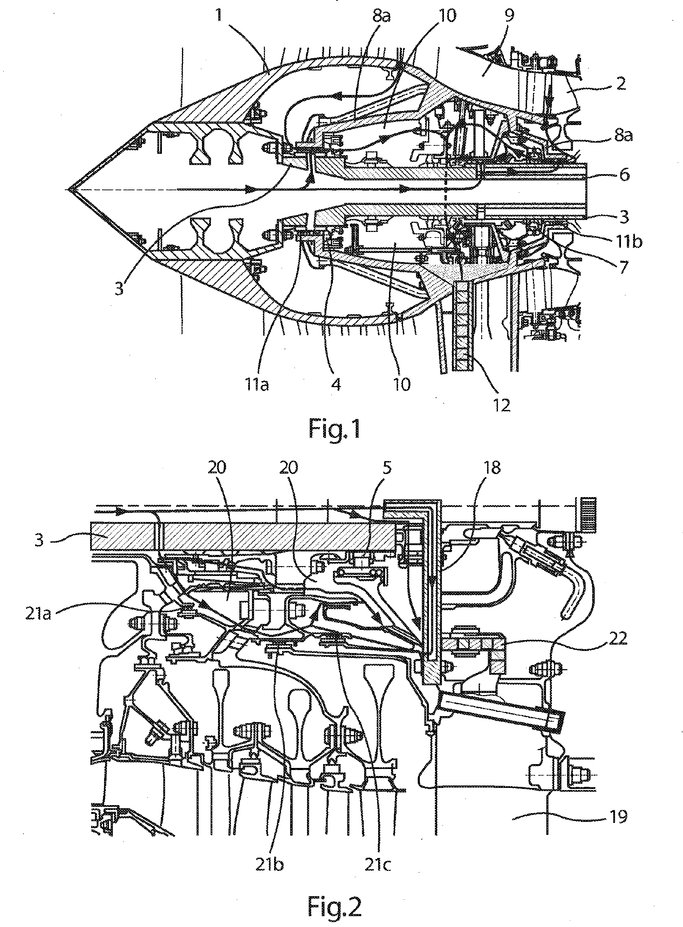

L'enceinte avant est formée, pour sa partie fixe, par des éléments d'une pièce structurale dénommée carter intermédiaire, alors que l'enceinte arrière est formée par des éléments d'une seconde pièce structurale dénommée carter d'échappement. Des exemples de telles enceintes sont représentés sur les figures 1 et 2. Ces pièces structurales portent les paliers qui portent eux-mêmes les pièces mobiles de la turbomachine.

Pour garantir la conservation de l'huile à l'intérieur des enceintes de lubrification, celles-ci sont généralement maintenues en surpression par rapport aux cavités environnantes. Pour cela de l'air sous pression leur est injecté par des orifices adaptés à cet effet. En sortie de l'enceinte on récupère un mélange d'air et d'huile, dont les composants sont ensuite séparés par un dispositif du type déshuileur, pour être, pour l'huile, renvoyée dans le réservoir ad hoc, et, pour l'air de pressurisation, évacué vers l'extérieur.

Dans l'art antérieur l'air de pressurisation des enceintes est prélevé en aval d'un étage de compresseur, et généralement à l'aval du compresseur basse pression (BP). Sur les moteurs existants cette pression est suffisamment forte pour assurer la surpression recherchée, sans que l'air qui y est prélevé soit à une température trop élevée. Sur les moteurs modernes où les taux de compression des compresseurs sont de plus en plus élevés, la température de l'air est relativement importante en sortie du compresseur BP. Il s'ensuit que l'air, lorsqu'il arrive dans la seconde enceinte, présente une température trop élevée du fait des calories qu'il a reçues au cours de son cheminement à l'intérieur du moteur, ledit cheminement longeant les parties chaudes du moteur. Il n'assurerait plus correctement sa fonction de refroidissement et l'huile de l'enceinte pourrait alors dépasser la température de 200°C dans certaines phases de fonctionnement, ce qui n'est pas acceptable.

Il pourrait être envisagé de prélever de l'air plus en amont que la sortie du compresseur BP mais la pression de l'air prélevé serait insuffisante, notamment aux faibles régimes et lors du fonctionnement au sol, pour alimenter correctement les enceintes. Il y aurait alors le risque d'un débit d'air insuffisant ou même de possibles phénomènes d'inversion du sens de circulation de l'air de refroidissement des enceintes.

Une autre solution pourrait être d'installer un échangeur additionnel de type air-huile ou air/carburant et/ou une ligne de retour carburant vers le réservoir afin d'augmenter le débit de l'huile, et donc son pouvoir de refroidissement, dans les phases à faible régimes. Mais de telles solutions sont complexes à mettre en oeuvre et génératrices de poids supplémentaire, EP 2050932 décrit un système de pressurisation d'une enceinte de lubrification des paliers d'une turbomachine selon le préambule de la revendication 1.

La présente invention a pour but de remédier à ces inconvénients en proposant un système de pressurisation de l'air de refroidissement des enceintes de lubrification des paliers des turbomachines modernes qui ne présente pas certains des inconvénients de l'art antérieur et, en particulier, qui assure une circulation efficace de l'air de conditionnement des enceintes pour tous les régimes de fonctionnement de la turbomachine.

A cet effet, l'invention a pour objet un système de pressurisation d'au moins une enceinte de lubrification des paliers d'une turbomachine comprenant un circuit d'alimentation en air sous pression de ladite enceinte et un circuit de récupération du brouillard d'huile formé dans l'enceinte et de retour de ce brouillard en direction du réservoir d'huile de la turbomachine ; il est caractérisé en ce que le circuit d'alimentation alimente ladite enceinte par de l'air prélevé en amont du compresseur basse pression. Le choix d'une aspiration par de l'air prélevé en amont du compresseur BP, c'est-à-dire directement dans la manche d'entrée du moteur, permet de fonctionner avec de l'air le plus froid possible et ainsi d'éviter que celui-ci n'ait une température déjà élevée avant sa circulation dans les enceintes à lubrifier et à refroidir.

De façon préférentielle le circuit d'alimentation est alimenté à la fois par de l'air prélevé en amont du compresseur et par de l'air prélevé en aval d'un étage de compresseur, celui-ci étant ramené à la pression de l'air prélevé en amont du compresseur par son passage à travers un labyrinthe. On assure ainsi un débit suffisant pour le refroidissement des enceintes. L'air prélevé à l'aval d'un compresseur est ramené à la pression de l'air provenant de l'entrée d'air en le faisant passer à travers des labyrinthes qui font chuter sa pression.

Dans un mode préférentiel de réalisation le circuit de récupération comporte, en aval de ladite enceinte, un moyen d'aspiration dudit brouillard. Ce dispositif permet de faire circuler l'air de refroidissement même aux faibles vitesses ou au sol où la pression dans l'entrée d'air serait insuffisante pour assurer cette circulation.

Avantageusement ledit moyen d'aspiration est positionné en aval d'un déshuileur de séparation de l'air et de l'huile formant ledit brouillard, de façon à exercer son aspiration sur de l'air déshuilé.

Cette configuration a l'avantage de la simplicité puisque l'air aspiré peut alors être directement évacué vers l'extérieur.

De façon préférentielle ledit moyen d'aspiration est implanté sur le réservoir d'huile. L'ensemble des fonctions de déshuilage et d'évacuation de l'air de pressurisation est alors concentré en un lieu unique.

Dans un mode particulier de réalisation le moyen d'aspiration comporte une pompe à jet.

Un tel dispositif est simple à mettre en oeuvre grâce à la grande disponibilité d'air sous pression qui peut être prélevé dans la veine de la turbomachine.

Avantageusement la pompe à jet est alimentée par de l'air prélevé sur un étage d'un compresseur.

Dans un mode particulier de réalisation le circuit d'alimentation en air de la pompe à jet comporte une vanne de régulation de la pression d'alimentation de ladite pompe à jet.

Ce dispositif permet de réguler le niveau d'aspiration de la pompe à jet et donc le niveau de dépression imposé au circuit de récupération de l'air déshuilé.

Avantageusement lequel ladite vanne de régulation est pilotée en fonction de l'écart de pression existant entre l'intérieur et l'extérieur du réservoir d'huile. Cela permet de garantir l'intégrité du réservoir d'huile et d'éviter son effondrement sous un trop grand écart de pression.

De façon préférentielle le système de pressurisation comporte un module de commande mettant l'aspiration hors service lorsque le régime de la turbomachine dépasse une valeur prédéfinie.

La nécessité d'une aspiration ne se faisant sentir qu'aux faibles régimes, un tel module permet d'éviter un prélèvement d'air inutile lorsque la turbomachine est sollicitée pour fournir de la puissance.

L'invention porte également sur une turbomachine comprenant au moins une enceinte de lubrification d'au moins un de ses paliers caractérisée en ce qu'elle comporte un système de pressurisation tel que, décrit ci-dessus pour l'alimentation de ladite enceinte en air sous pression.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue en coupe d'une turbomachine, au niveau de son enceinte avant ;
- la figure 2 est une vue en coupe d'une turbomachine, au niveau de son enceinte arrière ;
- la figure 3 est une vue schématique d'un système de lubrification et de pressurisation des enceintes d'une turbomachine, selon un mode de réalisation de l'invention.

En se référant à la figure 1, on voit la partie avant d'une turbomachine comprenant un compresseur BP 1 et le premier étage d'un compresseur haute pression (HP) 2. Le compresseur BP 1 est porté par un arbre basse pression 3 qui roule sur un palier BP avant 4 équipé d'un roulement de butée et sur un palier BP arrière 5 (visible sur la figure 2) équipé d'un roulement à rouleaux. Le compresseur HP est, quant à lui, porté par un arbre haute pression 6 qui roule sur un palier HP avant 7 équipé d'un roulement de butée et sur un palier HP arrière (non représenté). Les paliers avant BP et HP sont maintenus en place par des brides 8a et 8b du carter intermédiaire 9. Les brides 8a et 8b constituent avec l'arbre BP 3 une cavité 10, formant enceinte de refroidissement et de lubrification des paliers et roulements de la partie avant du moteur. L'étanchéité entre les brides fixes 8a et 8b et le rotor BP 3 est assurée par des labyrinthes 11a et 11b qui referment l'enceinte avant 10.

Sur la figure est représenté le cheminement de l'air de pressurisation de l'enceinte avant 10, avec un prélèvement principal d'air qui est effectué à travers le cône avant de la turbomachine, de sorte que l'air qui y est prélevé soit à une température relativement basse puisqu'il n'a pas été comprimé. Cet air provient de la manche d'entrée d'air du moteur et pénètre dans le cône avant à travers un orifice (non représenté) qui peut se situer soit à la pointe du cône, soit sur sa surface. Il passe ensuite du cône avant dans l'enceinte avant 10 par des ouvertures pratiquées dans les rotors haute et basse pression.

Des prélèvements complémentaires d'air sont effectués en aval du compresseur BP 1, en sortie du dernier étage de ce compresseur, et en entrée du compresseur HP 2 pour assurer un débit suffisant. Cet air, qui pénètre dans l'enceinte avant 10 en traversant les labyrinthes 11a et 11b, est ramené à une pression proche de celle de l'air du cône par le réglage d'efficacité donné à ces labyrinthes. L'air en provenance du cône pénétrant dans l'enceinte 10 en aval des labyrinthes 11a et 11b, il est possible d'obtenir des pressions voisines entre ces deux arrivées d'air, pour ne pas avoir de phénomène d'inversion de leur sens de circulation.

L'air de pressurisation se charge d'huile en circulant dans l'enceinte 10 et le brouillard ainsi constitué est récupéré en partie basse de l'enceinte pour passer dans un déshuileur 12 où sont séparés l'air et l'huile.

De même, à l'aval du moteur en référence à la figure 2, une enceinte arrière de pressurisation 20, qui renferme les paliers portant les arbres de rotation 3 et 6, est délimitée, d'une part, par une bride 18 et des cloisons fixes portées par le carter d'échappement 19 et, d'autre part, par des cloisons mobiles liées aux pièces tournantes. Des labyrinthes 21a, 21b et 21c assurent l'étanchéité entre les pièces fixes et les pièces tournantes. L'air de pressurisation, en provenance du cône avant par l'intermédiaire de l'intérieur des arbres de rotation haute et basse pression, pénètre dans l'enceinte 20 au travers d'orifices pratiqués à cet effet dans le ou les arbres de rotation du moteur, où il s'y charge d'huile pour former un brouillard de lubrification, et il en ressort par un déshuileur 22 qui sépare l'huile de l'air et renvoie l'huile récupérée dans le réservoir général d'huile de la turbomachine.

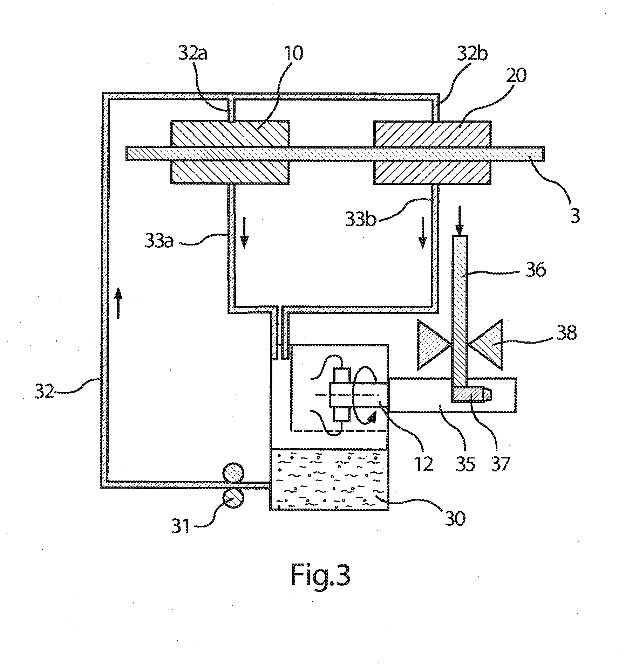

En se référant maintenant à la figure 3 on va maintenant décrire le schéma d'un dispositif de lubrification et de pressurisation des enceintes avant 10 et arrière 20, dans un mode de réalisation selon l'invention. Le circuit d'huile comprend classiquement un réservoir 30 contenant de l'huile qui est maintenue, par des systèmes connus d'échangeurs, à une température suffisamment basse pour permettre le refroidissement des paliers et des roulements du moteur. Le circuit comprend une pompe de circulation d'huile 31 et des canalisations 32, 32a et 32b d'amenée de l'huile respectivement dans les enceintes avant 10 et arrière 20, où l'huile est injectée sur les pièces à refroidir par l'intermédiaire de gicleurs (non représentés). Des canalisations de récupération respectivement 33a et 33b, assurent le recueil du brouillard d'huile en sortie des enceintes avant 10 et arrière 20. Le brouillard récupéré sur les deux enceintes débouche dans le réservoir 30 qui comporte un déshuileur 12 (les deux déshuileurs 12 et 22 des figures 1 et 2 étant confondus dans la configuration de la figure 3).

Le déshuileur élimine l'huile du brouillard ; celle-ci retombe dans le réservoir alors que l'air est éjecté vers l'extérieur de ce même réservoir. L'éjection de l'air est facilitée par une mise en dépression à l'aide d'une pompe à jet 35 fonctionnant sur le principe d'un Venturi : de l'air sous pression est prélevé en sortie d'un étage de compresseur par une canalisation 36 et est envoyé dans une buse 37 pour créer une dépression à la sortie du déshuileur 12. Une vanne de régulation 38 est placée sur la canalisation d'alimentation en air 36 de la pompe à jet 35 pour régler la dépression dans le Venturi et ainsi piloter l'écart de pression entre l'intérieur et l'extérieur du réservoir d'huile, de façon à garantir son intégrité.

L'air utilisé pour faire fonctionner le Venturi, qui circule dans la canalisation 36, est prélevé en sortie d'un étage de compresseur pour bénéficier d'une pression supérieure à celle de l'air de la manche d'entrée. La température de cet air, qui est de ce fait supérieure à celle de l'air de pressurisation, n'a pas d'influence sur le refroidissement des paliers et des roulements, puisqu'il ne circule pas à l'intérieur des enceintes 10 et 20.

On va maintenant décrire le fonctionnement du circuit de pressurisation des enceintes avant et arrière avec un dispositif selon l'invention, tel qu'il est représenté sur la figure 3.

L'air de pressurisation des enceintes est prélevé à une pression relativement basse pour éviter qu'il ne soit à une température trop élevée, auquel cas il ne parviendrait pas à refroidir efficacement les paliers et roulements de l'enceinte arrière 20. Cet air se charge en huile dans les deux enceintes et le brouillard ainsi constitué est récupéré en sortie par des canalisations de récupération 33a et 33b, qui le dirigent dans le réservoir d'huile 30.

Le déshuileur 12 sépare l'huile, qui retombe dans le réservoir 30, de l'air de pressurisation qui est aspiré par la pompe à jet 35 et rejeté à l'extérieur du moteur. La circulation de l'air de pressurisation est ainsi assurée, à la fois par la pression générée dans la manche d'entrée et par une dépression en sortie générée par l'aspiration de la pompe à jet 35. Il n'est donc plus nécessaire de choisir de l'air mis en pression par un ou plusieurs étages de compresseur, ce qui aurait pour effet d'élever de façon excessive la température de l'air à l'entrée des enceintes, pour garantir, à tous les régimes de fonctionnement, la circulation dans les enceintes de l'air de pressurisation et de refroidissement. Le concepteur de la turbomachine a ainsi toute latitude pour choisir le niveau de pression de l'air alimentant le Venturi. L'air de pressurisation étant prélevé à un niveau de pression encore relativement faible, est à une température qui n'est pas trop élevée, ce qui répond au problème technique que l'invention se propose de résoudre.

Dans le mode de réalisation représenté la pompe à jet 35 est fixée sur le réservoir d'huile, ce qui présente l'avantage d'aspirer l'air de pressurisation en aval du déshuileur et donc d'aspirer un air déshuilé.

La présence de la vanne de régulation 38 a pour objet de régler le niveau de dépression créée dans la pompe à jet 35 et, par suite, de contrôler l'écart de pression existant entre l'intérieur et l'extérieur du réservoir d'huile. On peut grâce à elle s'assurer que la dépression créée à l'intérieur du réservoir par la pompe à jet ne dépassera pas les limites structurelles du réservoir et que celui-ci ne va pas s'effondrer sous l'action de la pression environnante.

Enfin, à cette vanne peut être associée un dispositif de commande qui met en ou hors service la pompe à jet selon les conditions d'utilisation de la turbomachine. Le besoin de créer une aspiration en sortie du circuit de pressurisation ne se faisant sentir qu'au sol ou aux bas régimes en vol, il est possible, à l'aide d'un module de commande approprié, de fermer la vanne de régulation 38 dès que le régime du moteur atteint une valeur prédéterminée. La fermeture de la canalisation d'alimentation en air 36 permet l'arrêt du prélèvement d'air sur le compresseur, car celui-ci devient sans objet aux régimes élevés alors même que le pilote sollicite plus de puissance de la part du moteur.

Le système a été décrit avec une pompe à jet 35 positionnée en sortie du déshuileur 12 ; il est bien évident que celle-ci peut être remplacée par tout dispositif qui génère une aspiration de l'air en sortie des enceintes avant 10 et arrière 20 et donc qui permette le choix d'une surpression moins forte en entrée du circuit de pressurisation.

## Revendications

1. Système de pressurisation d'au moins une enceinte (10, 20) de lubrification des paliers (4, 5, 7) d'une turbomachine comprenant un circuit d'alimentation en air sous pression de ladite enceinte et un circuit de récupération (33a, 33b) du brouillard d'huile formé dans l'enceinte et de retour de ce brouillard en direction du réservoir d'huile (30) de la turbomachine,
**caractérisé en ce que** le circuit d'alimentation alimente ladite enceinte par de l'air prélevé en amont du compresseur basse pression (1).

2. Système de pressurisation selon la revendication 1 dans lequel le circuit d'alimentation est alimenté à la fois par de l'air prélevé en amont du compresseur basse pression (1) et par de l'air prélevé en aval d'un étage de compresseur, celui-ci étant ramené à la pression de l'air prélevé en amont du compresseur par son passage à travers un labyrinthe (11a, 11b).

3. Système de pressurisation selon l'une des revendications 1 ou 2 dans lequel le circuit de récupération comporte, en aval de ladite enceinte, un moyen d'aspiration (35) dudit brouillard.

4. Système de pressurisation selon la revendication 3 dans lequel ledit moyen d'aspiration (35) est positionné en aval d'un déshuileur (12) de séparation de l'air et de l'huile formant ledit brouillard, de façon à exercer son aspiration sur de l'air déshuilé.

5. Système de pressurisation selon la revendication 4 dans lequel ledit moyen d'aspiration est implanté sur le réservoir d'huile (30).

6. Système de pressurisation selon l'une des revendications 3 à 5 dans lequel le moyen d'aspiration comporte une pompe à jet (35).

7. Système de pressurisation selon la revendication 6 dans lequel la pompe à jet (35) est alimentée par de l'air prélevé sur un étage d'un compresseur (1,2).

8. Système de pressurisation selon l'une des revendications 6 ou 7 dans lequel le circuit d'alimentation en air (36) de la pompe à jet (35) comporte une vanne de régulation (38) de la pression d'alimentation de ladite pompe à jet.

9. Système de pressurisation selon la combinaison des revendications 5 et 8 dans lequel ladite vanne de régulation (38) est pilotée en fonction de l'écart de pression existant entre l'intérieur et l'extérieur du réservoir d'huile.

10. Système de pressurisation selon l'une des revendications 3 à 9 **caractérisé en ce qu'**il comporte un module de commande mettant l'aspiration hors service lorsque le régime de la turbomachine dépasse une valeur prédéfinie.

11. Turbomachine comprenant au moins une enceinte de lubrification d'au moins un de ses paliers **caractérisée en ce qu'**elle comporte un système de pressurisation selon l'une des revendications précédentes pour l'alimentation de ladite enceinte en air sous pression.

## Patentansprüche

1. Druckbeaufschlagungssystem für mindestens einen Schmierraum (10, 20) der Lager (4, 5, 7) eines Turbotriebwerks, umfassend einen Kreislauf für die Versorgung des Raums mit Druckluft und einen Kreislauf für die Rückgewinnung (33a, 33b) des in dem Raum gebildeten Ölnebels und die Rückführung dieses Nebels in Richtung des Öltanks (30) des Turbotriebwerks, **dadurch gekennzeichnet, dass** der Versorgungskreislauf den Raum mit Luft versorgt, die oberhalb des Niederdruckkompressors (1) entnommen wird.

2. Druckbeaufschlagungssystem nach Anspruch 1, wobei der Versorgungskreislauf gleichzeitig versorgt wird mit Luft, die oberhalb des Niederdruckkompressors (1) entnommen wird, und mit Luft, die unterhalb einer Kompressorstufe entnommen wird, wobei diese beim Durchströmen eines Labyrinths (11 a, 11 b) dem Druck der Luft, die oberhalb des Kompressors entnommen wird, angepasst wird.

3. Druckbeaufschlagungssystem nach einem der Ansprüche 1 oder 2, wobei der Rückgewinnungskreislauf stromabwärts des Raums ein Mittel zum Ansaugen (35) des Nebels aufweist.

4. Druckbeaufschlagungssystem nach Anspruch 3, wobei das Ansaugmittel (35) stromabwärts eines Ölabscheiders (12) zum Trennen von Luft und Öl, die den Nebel bilden, angeordnet ist, so dass es seine Ansaugung an der entölten Luft ausführt.

5. Druckbeaufschlagungssystem nach Anspruch 4, wobei das Ansaugmittel an dem Öltank (30) angeordnet ist.

6. Druckbeaufschlagungssystem nach einem der Ansprüche 3 bis 5, wobei das Ansaugmittel eine Strahlpumpe (35) aufweist.

7. Druckbeaufschlagungssystem nach Anspruch 6, wobei die Strahlpumpe (35) mit Luft versorgt wird, die an einer Stufe eines Kompressors (1, 2) entnommen wird.

8. Druckbeaufschlagungssystem nach einem der Ansprüche 6 oder 7, wobei der Luftversorgungskreislauf (36) der Strahlpumpe (35) ein Regelventil (38) für den Versorgungsdruck der Strahlpumpe aufweist.

9. Druckbeaufschlagungssystem nach der Kombination der Ansprüche 5 und 8, wobei das Regelventil (38) je nach Druckunterschied zwischen dem Inneren und dem Äußeren des Öltanks angesteuert wird.

10. Druckbeaufschlagungssystem nach einem der Ansprüche 3 bis 9, **dadurch gekennzeichnet, dass** es ein Steuerungsmodul aufweist, das die Ansaugung abschaltet, wenn die Drehzahl des Turbotriebwerks einen vordefinierten Wert übersteigt.

11. Turbotriebwerk, mindestens einen Schmierraum für mindestens eines seiner Lager umfassend, **dadurch gekennzeichnet, dass** es ein Druckbeaufschlagungssystem nach einem der vorhergehenden Ansprüche für die Versorgung des Raumes mit Druckluft aufweist.

## Claims

1. A system for pressurizing at least one chamber (10, 20) for lubricating the bearings (4, 5, 7) of a turbomachine, comprising a circuit for supplying said chamber with pressurized air, and a circuit (33a, 33b) for recovering the oil mist formed in the chamber and for returning this mist to the oil reservoir (30) of the turbomachine,
**characterized in that** the supply circuit supplies said chamber with air bled from upstream of the low-pressure compressor (1).

2. The pressurizing system as claimed in claim 1, in which the supply circuit is supplied both with air bled from upstream of the low-pressure compressor (1) and with air bled from downstream of a compressor stage, the latter air being returned to the pressure of the air bled from upstream of the compressor by being passed through a labyrinth (11a, 11b).

3. The pressurizing system as claimed in either of claims 1 and 2, in which the recovery circuit comprises, downstream of said chamber, means (35) for suction of said mist.

4. The pressurizing system as claimed in claim 3, in which said suction means (35) is arranged downstream of an oil separator (12) for separating the air and oil forming said mist, such that the suction acts on oil-free air.

5. The pressurizing system as claimed in claim 4, in which said suction means is fitted to the oil reservoir (30).

6. The pressurizing system as claimed in one of claims 3 to 5, in which the suction means comprises a jet pump (35).

7. The pressurizing system as claimed in claim 6, in which the jet pump (35) is supplied with air bled from a stage of a compressor (1, 2).

8. The pressurizing system as claimed in either of claims 6 and 7, in which the circuit (36) for supplying air to the jet pump (35) comprises a valve (38) for regulating the supply pressure of said jet pump.

9. The pressurizing system as claimed in the combination of claims 5 and 8, in which said regulating valve (38) is actuated in dependence on the difference in pressure between the interior and the exterior of the oil reservoir.

10. The pressurizing system as claimed in one of claims 3 to 9, **characterized in that** it comprises a control module which switches off the suction when the turbomachine exceeds a predefined rotational speed.

11. A turbomachine comprising at least one chamber for lubricating at least one of its bearings, **characterized in that** it comprises a pressurizing system as claimed in one of the preceding claims for supplying said chamber with pressurized air.
